# EUROPÄISCHE PATENTANMELDUNG

(11) **EP 1 302 751 A2**
(43) Veröffentlichungstag der Anmeldung: **16.04.2003**
(21) Anmeldenummer: 02020198.4
(22) Anmeldetag: 10.09.2002
(51) Int. Cl.: G01C 21/36

(54) **Verfahren und Vorrichtung zur Zielauswahl eines Navigationssystems in einem Kraftfahrzeug unter Verwendung einer Dienstzentrale**

(30) Priorität: 10.10.2001 DE 10149862
(71) Anmelder: DaimlerChrysler AG, 70567 Stuttgart (DE)
(72) Erfinder: Demir, Cesim, Dr., 71134 Aidlingen (DE); Melheritz, Markus, Dr., 71254 Ditzingen (DE); Windhab, Marcus, 73776 Altbach (DE)

(57) **Zusammenfassung**

Die Erfindung betrifft ein Verfahren und eine Vorrichtung zur Zielauswahl eines Navigationssystems in einem Kraftfahrzeug unter Verwendung einer Dienstezentrale, wobei zur Zielauswahl dem Kraftfahrzeug drahtlos nach Angaben eines Nutzers erstellte Zielinformationsdaten von der Dienstezentrale zugeführt werden.

Erfindungsgemäß ist eine Bedieneinheit im Kraftfahrzeug vorgesehen, wobei
- wenigstens eine vom Nutzer unter Verwendung der Bedieneinheit und/ oder eines Sprachkommunikationsmittels benannte alphanumerische Adresse drahtlos als Daten- oder Sprachnachricht an die Dienstezentrale gesendet wird,
- die Dienstezentrale geeignete Zielinformationsdaten zur Zielauswahl des Navigationssystems zu dieser Adresse erzeugt,
- die erzeugten Zielinformationsdaten drahtlos von der Dienstezentrale der Bedieneinheit zugeführt werden und
- die Bedieneinheit mit den Zielinformationsdaten das Navigationssystem ansteuert.

## Beschreibung

Die Erfindung betrifft ein Verfahren zur Zielauswahl eines Navigationssystems in einem Kraftfahrzeug unter Verwendung einer Dienstezentrale gemäß dem Oberbegriff von Anspruch 1 sowie eine Vorrichtung zur Durchführung des Verfahrens nach dem Oberbegriff von Anspruch 15. Dabei ist die Dienstezentrale eine zentrale Verarbeitungseinheit mit einer von Teilnehmern eines entsprechenden Dienstes drahtlos nutzbaren Datenbank.

Zur Durchführung einer Navigation, also der Berechnung und Anzeige einer geeigneten Fahrtstrecke zu einem Reiseziel, ist beim Navigationssystem zuerst eine Zielauswahl vorzunehmen. Zur Zielauswahl wird dem Navigationssystem ein von einem Nutzer ausgewähltes Reiseziel verfügbar gemacht, wobei die automatisierte Verarbeitung des Reiseziels im Navigationssystem in geographischen Koordinaten erfolgt.

Die DE 37 44 532 A1 offenbart ein Verfahren zur Zielauswahl eines Navigationssystems in einem Kraftfahrzeug, wobei zur Zielauswahl vom Nutzer Daten in Form von Straßennamen und Hausnummern eingegeben werden. In einem Datenspeicher abgelegte Stützpunktdaten werden auf Übereinstimmung mit den eingegebenen Daten geprüft. Aus dem Datenspeicher werden bei festgestellter Übereinstimmung die zur Navigation erforderlichen Daten übernommen. In den Datenspeicher müssen somit vorher die geographischen Koordinaten zu allen möglichen Straßen und Hausnummern abgespeichert werden.

Die EP 0 933 744 A2 beschreibt ein Verfahren zum Suchen einer Zieladresse, wobei die Zieladresse für die Zielauswahl durch ein Navigationssystem verwendet wird. Von einem Nutzer eingegebene Daten werden zur Zieladresse vervollständigt, indem fehlende Angaben in Verbindung mit einem adressbezogenen Auskunftssystem in Form eines Dialogs mit dem Nutzer ermittelt werden.

In der gattungsbildenden DE 298 12 320 U1 wird eine Vorrichtung zur Zielauswahl eines Navigationssystems in einem Kraftfahrzeug dargelegt, wobei ein Nutzer die Eingabe von Daten zur Zielauswahl außerhalb des Kraftfahrzeugs an einem Rechnersystem mit üblichen Eingabemitteln vornimmt. Die eingegebenen Daten werden in einer vom Rechnersystem getrennten Dienstezentrale zwischengespeichert und auf Anforderung drahtlos dem Navigationssystem zugeführt. Der Nutzer kann auch eines von mehreren vorher eingegebenen Zielen durch Anforderung der entsprechenden Daten auswählen. Eine freie Auswahl des Reiseziels durch den Nutzer im Kraftfahrzeug ist nicht vorgesehen.

Der Erfindung liegt die Aufgabe zugrunde, das gattungsgemäße Verfahren derart zu verbessern, dass der Bedienkomfort erhöht und die Nutzbarkeit verbessert wird.

Diese Aufgabe wird erfindungsgemäß bezüglich des Verfahrens durch die Merkmale des Anspruchs 1 und bezüglich der Vorrichtung durch die Merkmale des Anspruchs 15 gelöst. Die Unteransprüche betreffen vorteilhafte Aus- und Weiterbildungen der Erfindung.

Der Hauptgedanke der Erfindung besteht darin, dass in einem Kraftfahrzeug mit einem Navigationssystem zusätzlich eine Bedieneinheit vorgesehen und zur Zielauswahl des Navigationssystems wenigstens eine vom Nutzer benannte Zieladresse drahtlos an eine Dienstezentrale gesendet, dort zu dieser Adresse geeignete Zielinformationsdaten erzeugt und die erzeugten Zielinformationsdaten drahtlos der Bedieneinheit zugeführt werden, wobei die Bedieneinheit mit den Zielinformationsdaten das Navigationssystem ansteuert. Anders ausgedrückt, wird die Dienstezentrale dazu verwendet ein oder mehrere vom Nutzer ausgewählte Reiseziele derart zu verarbeiten, dass diese Reiseziele zur Zielauswahl im Navigationssystem des Kraftfahrzeugs verwendbar sind. Dabei wird vom Nutzer das Reiseziel zur Auswahl eindeutig benannt.

In einer vorteilhaften Ausführungsform wird die Zieladresse vom Nutzer als vollständige, übliche Adresse benannt, beispielsweise in der Form "Vorname, Nachname, Straßenname, Hausnummer, Wohnort". Dadurch wird ein gewähltes Reiseziel vom Nutzer auf besonders einfache Weise eindeutig als Zieladresse benannt.

Durch das erfindungsgemäße Verfahren wird in vorteilhafter Weise jederzeit eine komfortable und adressfeine Zielauswahl des Navigationssystems ermöglicht. Anstatt einen umständlichen und zeitraubenden Bedienvorgang durchzuführen, benennt der Nutzer lediglich sein gewähltes Reiseziel als Zieladresse, z.B. in Form einer üblichen Adresse. Diese Vereinfachung der Zielauswahl erhöht die Bereitschaft zur Nutzung des Navigationssystems und ermöglicht so eine komfortable, sichere und stressfreie Fahrt zum Reiseziel. Zudem wird durch eine daraus resultierende stärkere Akzeptanz beim Nutzer die Nachfrage nach Navigationssystemen gesteigert und so der geschäftliche Erfolg von Herstellern von Navigationssystemen gesichert. Die Beschränkung der zwischen Kraftfahrzeug und Dienstezentrale drahtlos zu übertragenden Daten auf eine oder mehrere Zieldressen bzw. die Zielinformationsdaten minimiert zudem Kommunikationskosten.

Durch die Verwendung der Dienstezentrale bei der Zielauswahl des Navigationssystems wird ein Zugriff auf einen besonders umfangreichen und aktuellen Datenbestand erreicht. Dieser Datenbestand wird verwendet, um geeignete Zielinformationsdaten zu erzeugen. Damit wird im Kraftfahrzeug kein Speicher zur vollständigen Speicherung aller Zieladressen des Navigationssystems benötigt. Weiterhin müssen keine Aktualisierungen der im Kraftfahrzeug gespeicherten Zieladressen durchgeführt werden. Die Dienstezentrale wird erfindungsgemäß "so spät wie möglich" verwendet, womit die größtmögliche Aktualität des Datenbestands gewährleistet ist. Die Erzeugung der Zielinformationsdaten in der Dienstezentrale kann dabei in automatisierter Form, durch Bedienpersonal oder als beliebige Kombination dieser beiden Formen vorgesehen sein.

Bei einer vorteilhaften Ausführungsform der Erfindung wird wenigstens eine der Zieladressen vom Nutzer unter Verwendung der Bedieneinheit benannt. Hierfür ist die Bedieneinheit im Kraftfahrzeug, z.B. abhängig von Präferenzen und finanziellen Möglichkeiten des Nutzers, geeignet ausgebildet. Beispielsweise beinhaltet die Bedieneinheit ein Mikrofon zur Tonaufnahme einer vom Nutzer akustisch benannten Zieladresse. Zusätzlich kann die Bedieneinheit eine Spracherkennung umfassen welche die vom Nutzer akustisch benannten Zieladresse in eine entsprechende Datennachricht verarbeitet. Weitere Realisierungsmöglichkeiten sind dem Fachmann bekannt und können einzeln oder auch in beliebiger Kombination vorgesehen sein.

Eine besonders vorteilhafte Ausführungsform sendet wenigstens eine der Zieladressen als Sprachnachricht an die Dienstezentrale. Hierzu wird vorzugsweise ein Mobiltelefon verwendet, wie es bereits routinemäßig von der Mehrzahl der Nutzer auf Reisen mitgeführt wird. Damit wird dem Nutzer kein ihm fremdes Gerät zur Zielauswahl zugemutet, sondern er nutzt z.B. das ihm vertraute Mobiltelefon. Zusätzlich wird der gerätetechnische Aufwand zur Zielauswahl des Navigationssystems verringert, indem zur Zielauswahl bereits beim Nutzer und/oder im Kraftfahrzeug vorhandene Geräte Verwendung finden.

Eine weitere vorteilhafte Ausführungsform sendet wenigstens eine der Zieladressen als Datennachricht an die Dienstezentrale. Eine geeignete Datennachricht wird beispielsweise, wie oben dargelegt, von einer Spracherkennung aus einer vom Nutzer akustisch benannten Zieladresse erzeugt. Ein weiteres Beispiel ist die Erzeugung einer Datennachricht von einem vom Nutzer mitgeführten portablen Gerät (PDA, "Personal Digital Assistant") durch Abruf gespeicherter Adressen. Zum Senden der Datennachricht ist ein geeignetes Sendemittel beispielsweise im Kraftfahrzeug und/ oder im vom Nutzer mitgeführten portablen Gerät vorgesehen.

Sehr geeignet zur Benennung als Zieladressen durch den Nutzer sind standardisierte Adressen, z.B. in Form des "Microsoft VCard - Standards". Ein solcher Standard erhöht durch die Vorgabe einer bestimmten Form und eines bestimmten Umfangs bei der Benennung der Zieladresse die Erkennungssicherheit der Zielauswahl. Weiterhin ermöglicht die Verwendung standardisierter Adressen die besonders einfache Nutzung bereits vorhandener Adressdatenbestände.

Die erfindungsgemäße Zielauswahl des Navigationssystems unter Verwendung der Dienstezentrale ermöglicht dem Nutzer eine besonders komfortable und schnelle Zielauswahl. Der Nutzer wird somit häufig bei der Zielauswahl Zwischenreiseziele einbeziehen (z.B. Sehenswürdigkeiten oder Restaurants in der Nähe der Reiseroute). Die Einbeziehung solcher Zwischenreiseziele ermöglicht dem Nutzer eine individuelle und flexible Gestaltung seiner Reise.

In einer vorteilhaften Ausführungsform ist vorgesehen dass wenigstens eine der benannten Zieladressen zusätzlich gekennzeichnet werden kann. Dies ermöglicht insbesondere bei der Bennennung von mehr als einer Zieladresse (d.h. bei der Einbeziehung von Zwischenreisezielen) eine spezielle Kennzeichnung einer benannten Zieladresse z.B. als "Zwischenreiseziel" bzw. als "Endreiseziel".

Mit den von der Dienstezentrale erzeugten und der Bedieneinheit zugeführten Zielinformationsdaten steuert die Bedieneinheit das Navigationssystem an. Für den Fall, dass die Zielinformationsdaten wenigstens ein Zwischenreiseziel umfassen, kann diese Ansteuerung auf zwei unterschiedliche Arten realisiert sein. Zum einen kann das Navigationssystem mit den Zielinformationsdaten durch die Bedieneinheit für jedes Zwischenreiseziel getrennt angesteuert werden. Diese Art der Ansteuerung ermöglicht die Nutzung von Navigationssystemen, welche keine Möglichkeit der Navigation unter Verwendung von Zwischenreisezielen bieten. Zum anderen kann das Navigationssystem mit den Zielinformationsdaten durch die Bedieneinheit gesammelt angesteuert werden. Dies erlaubt eine vereinfachte Gestaltung der Bedieneinheit sowie eine besonders flexible Navigation.

In einer vorteilhaften Ausführungsform wird eine Kennungsinformation des Navigationssystems an die Dienstezentrale gesendet. Diese Kennungsinformation dient zur genaueren Beschreibung des Navigationssystems und besteht z.B. aus der Baureihenbezeichnung des Navigationssystems. Die Kennungsinformation wird in der Dienstezentrale zur Erzeugung solcher Zielinformationsdaten verwendet, die zur Zielauswahl dieses Navigationssystems besonders geeignet sind.

In einer vorteilhaften Ausführungsform wird Information zur Identifizierung des die Zielauswahl vornehmenden Nutzers an die Dienstezentrale gesendet. Damit wird die Erkennungssicherheit der Zielauswahl weiter gesteigert, indem z.B. Information über solche Zieladressen in der Dienstezentrale gespeichert wird, die in der Vergangenheit von diesem Nutzer bereits ausgewählt worden sind. Weiterhin wird der Komfort z.B. durch Verwendung einer "personalisierten Zieldatenbank" des Nutzers weiter erhöht.

Besonders vorteilhaft ist die erfindungsgemäße Nutzung der Dienstezentrale über ein Mobilfunknetz. Das Mobilfunknetz ermöglicht die Herstellung der drahtlosen Verbindung zwischen Dienstezentrale und Kraftfahrzeug nahezu flächendeckend durch Nutzung vorhandener Infrastruktur. Dabei sind Mobilfunknetze in verschiedener Ausprägung möglich, beispielsweise basierend auf Satelliten, GSM, UMTS ("Universal Mobile Telephone System") oder WLAN ("Wireless Local Area Network") einzeln oder in beliebiger Kombination.

Eine Vorrichtung zur Zielauswahl eines Navigationssystems in einem Kraftfahrzeug unter Verwendung einer Dienstezentrale, wobei zur Zielauswahl dem Kraftfahrzeug drahtlos nach Angaben eines Nutzers erstellte Zielformationsdaten von der Dienstezentrale zugeführt werden, ist dadurch gekennzeichnet, dass eine Bedieneinheit im Kraftfahrzeug vorgesehen ist und dass das Kraftfahrzeug ein Kommunikationsmittel und/ oder ein Sprachkommunikationsmittel umfasst. Dabei wird wenigstens eine vom Nutzer unter Verwendung der Bedieneinheit benannte Zieladresse drahtlos als Daten- oder Sprachnachricht vom Kommunikationsmittel im Kraftfahrzeug an das Kommunikationsmittel in der Dienstezentrale gesendet und/ oder wenigstens eine vom Nutzer akustisch benannte Zieladresse wird drahtlos vom Sprachkommunikationsmittel an das Kommunikationsmittel in der Dienstezentrale gesendet. In der Dienstezentrale erzeugt ein Zielerkennungsmittel im Zusammenwirken mit einem Mittel zur Zielinformationsdatenerzeugung unter Verwendung zumindest einer Adressdatenbank und einer digitalen Straßenkarte geeignete Zielinformationsdaten zur Zielauswahl des Navigationssystems im Kraftfahrzeug zu dieser Zieladresse. Die erzeugten Zielinformationsdaten werden drahtlos vom Kommunikationsmittel in der Dienstezentrale an das Kommunikationsmittel im Kraftfahrzeug übertragen und anschließend der Bedieneinheit zugeführt. Die Bedieneinheit steuert mit den Zielinformationsdaten das Navigationssystem an.

Eine vorteilhafte Ausführungsform der Erfindung wird anhand einer Zeichnung näher erläutert.

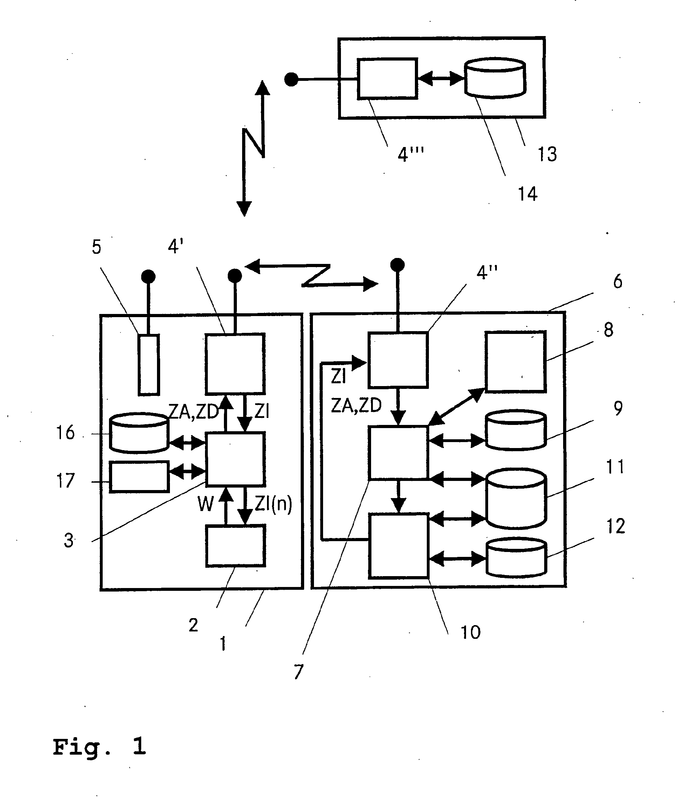

Die einzige Figur 1 zeigt in schematischer Darstellung ein Blockdiagramm eines Verfahrens und einer Vorrichtung zur Zielauswahl eines Navigationssystems in einem Kraftfahrzeug unter Verwendung einer Dienstezentrale.

In der Figur 1 ist eine Vorrichtung zur Zielauswahl eines Navigationssystems in einem Kraftfahrzeug unter Verwendung einer Dienstezentrale mit ihren hier interessierenden Komponenten in ihrem funktionellen Zusammenspiel als Blockdiagramm veranschaulicht. Gleichzeitig stellt die Figur 1 ein Flussdiagramm über den Ablauf des von dieser Vorrichtung durchgeführten Zielauswahlverfahrens dar, wenn hierzu die einzelnen Blöcke des Blockdiagramms statt als Systemkomponenten als Verfahrensschritte angesehen werden, welche von den betreffenden Systemkomponenten ausgeführt werden. Im folgenden erfolgt daher parallel die Erläuterung der einzelnen Systemkomponenten und der von ihnen ausgeführten Funktionen.

Figur 1 zeigt ein Kraftfahrzeug 1 umfassend ein in herkömmlicher Bauart ausgeführtes Navigationssystem 2, eine Bedieneinheit 3, ein Speichermittel 16 mit dynamischen lokalen Adressen (im Folgenden kurz Lokalspeicher 16 genannt), ein Mittel zur Fahreridentifizierung 17 (im Folgenden kurz Identmittel 17 genannt) sowie ein Kommunikationsmittel 4'. Zusätzlich umfasst das Kraftfahrzeug 1 ein Sprachkommunikationsmittel 5, z.B. ein Mobiltelefon. Das Kommunikationsmittel 4' stellt zumindest zeitweise eine drahtlose, bidirektionale Kommunikationsverbindung zu einem Kommunikationsmittel 4'' in einer Dienstezentrale 6 her. Das Sprachkommunikationsmittel 5 stellt zumindest zeitweise eine drahtlose, unidirektionale Kommunikationsverbindung zum Kommunikationsmittel 4'' in der Dienstezentrale 6 her. Die Dienstezentrale 6 umfasst weiterhin ein Zielerkennungsmittel 7, ein Bedienpersonalzugriff 8, eine Adressdatenbank 9, ein Mittel zur Zielinformationsdatenerzeugung 10, eine digitale Straßenkarte 11 und eine personalisierte Zieldatenbank 12. In dieser Ausführungsform ist weiterhin eine Datenzentrale 13 mit einem Kommunikationsmittel 4''' und einem Speichermittel 14 vorgesehen.

Die Bedieneinheit 3 ist beispielsweise als Steuergerät oder als herkömmliches Rechnersystem, z.B. als "Car-PC", ausgeführt und sendet und empfängt Signale zu und von dem Kommunikationsmittel 4', dem Lokalspeicher 16, dem Identmittel 17 sowie dem Navigationssystem 2. Das Navigationssystem 2, die Bedieneinheit 3, der Lokalspeicher 16, das Identmittel 17 und das Kommunikationsmittel 4' sind zum Senden und Empfangen der Signale beispielsweise über ein im Fahrzeug vorgesehenes Netzwerk, z.B. einen "CAN-Bus", elektrisch miteinander verbunden. Die Kommunikationsmittel 4', 4'', 4''' sowie das Sprachkommunikationsmittel 5 nutzen beispielsweise ein auf Satelliten, GSM, UMTS ("Universal Mobile Telephone System") und/ oder WLAN ("Wireless Local Area Network") basierendes Mobilfunknetz einzeln oder in beliebiger Kombination zur drahtlosen Kommunikation. Bei den Kommunikationsmitteln 4', 4'', 4''' ist dabei sowohl eine Verwendung von Sprachnachrichten, z.B. in Form eines Telefongesprächs, als auch von Datennachrichten, wie z.B. Textnachrichten (SMS, "Short Message Service") oder Datenfunk (WAP, "Wireless Application Protocol" bzw. "Mobile Internet"), vorgesehen.

In. einem ersten Verarbeitungsschritt wird wenigstens ein vom Nutzer ausgewähltes Reiseziel als Zieladresse durch den Nutzer benannt. Eine Möglichkeit zur Durchführung dieser Benennung ist die Nutzung der Bedieneinheit 3. Dazu umfasst die Bedieneinheit 3 beispielsweise ein Mikrofon zur Tonaufnahme einer oder aller vom Nutzer akustisch benannter Zieladressen. Die Tonaufnahme der akustisch benannten Zieladressen wird als Sprachnachricht ZA an das Kommunikationsmittel 4' gesendet. Alternativ wird die Tonaufnahme einem in der Bedieneinheit 3 beinhalteten Spracherkennungsmodul zugeführt, automatisiert verarbeitet und als entsprechende Datennachricht ZD an das Kommunikationsmittel 4' gesendet. Dabei kann auch vorgesehen sein, eine vom Spracherkennungsmodul nicht automatisiert zu verarbeitende Zieladresse ersatzweise als Sprachnachricht ZA an das Kommunikationsmittel 4' zu senden.

Zusätzlich oder alternativ greift die Bedieneinheit 3 auf einen Lokalspeicher 16 zu. Im Lokalspeicher 16 werden beispielsweise Adressen gespeichert, die von einem vom Nutzer mitgeführten portablen Gerät (PDA, "Personal Digital Assistant") drahtlos an ein in der Bedieneinheit 3 integriertes Mittel zur Nahbereichskommunikation, z.B. nach dem "Bluetooth"- Standard, gesendet werden. Ein anderes Beispiel ist die drahtlose Bereitstellung von positionsabhängigen Adressdaten über ein Mobilfunknetz ("Location Based Services"), wobei die Daten über das Kommunikationsmittel 4' empfangen und der Bedieneinheit 3 zugeführt werden. Die Bedieneinheit 3 speichert diese Adressen für eine festlegbare Zeitdauer im Lokalspeicher 16. Durch Auswahl aus diesen lokalen Adressen durch den Nutzer erfolgt die Benennung einer oder mehrerer Zieladressen. Die Auswahl wird z.B. über ein manuelles Bedienelement herkömmlicher Bauart an der Bedieneinheit 3, z.B. einen Joystick oder einen kombinierten Dreh-/Drückknopf, bewirkt. Dabei kann die Bedieneinheit 3 zur Darstellung der zu einem Zeitpunkt benennbaren Zieladressen z.B. eine Sprachausgabe und/ oder ein Display umfassen. Die oder alle durch den Nutzer durch Auswahl benannten Zieladressen werden als Datennachricht ZD an das Kommunikationsmittel 4' gesendet.

Das Identmittel 17 ist z.B. als elektronischer Datenträger vorsehbar, welchen der Nutzer mit sich führt - z.B. eine fahrerspezifische Chipkarte - und welche in eine mit dem Fahrzeug verbundene Vorrichtung eingeführt wird. Auf der Chipkarte sind fahrerspezifische Werte gespeichert, die von der Bedieneinheit 3 ausgewertet werden und die Generierung eines den Nutzer charakterisierenden Datensatzes bewirken. Dieser Datensatz wird an das Kommunikationsmittel 4' gesendet.

Die Benennung einer Zieladresse durch den Nutzer wird alternativ oder zusätzlich zu den bisher beschriebenen Möglichkeiten realisiert unter Verwendung eines Sprachkommunikationsmittels 5. Das Sprachkommunikationsmittels 5 ist dabei kein Bestandteil der Bedieneinheit 3 und sendet oder empfängt keine Signale zu bzw. vom Kommunikationsmittel 4' sowie zu bzw. vom Navigationssystem 2.

Für die Benennung einer oder mehrerer Zieladressen durch den Nutzer sind die obenstehend dargelegten Möglichkeiten nur als Beispiele anzusehen. Dem Fachmann sind eine Vielzahl weiterer Realisierungsmöglichkeiten bekannt. Genutzt werden diese Realisierungsmöglichkeiten einzeln oder in beliebiger Kombination zur Benennung einer oder mehrerer Zieladressen als vom Nutzer ausgewählte Reiseziele. Mit den bisher beschriebenen Realisierungsmöglichkeiten ist eine Benennung von Zieladressen zu jeder Zeit zu der sich der Nutzer im Kraftfahrzeug aufhält, also auch während das Kraftfahrzeug fährt, möglich. Abhängig von der gewählten Realisierungsform sind auch weitergehende Möglichkeiten der Benennung von Zieladressen möglich. Beispielsweise kann der Nutzer das Sprachkommunikationsmittel 5 auch außerhalb des Kraftfahrzeugs zur Benennung einer Zieladresse nutzten. Auch vorgesehen ist die aufeinander folgende Verwendung verschiedener Möglichkeiten zur Benennung mehrerer Zieladressen für eine Reise. Beispielsweise benennt der Nutzer eine erste Zieladresse, z.B. die Adresse eines Übernachtungshotels, durch Auswählen aus den im Lokalspeicher 16 abgelegten lokalen Adressen und anschließend als Zwischenreiseziel eine zweite Zieladresse, z.B. die Adresse eines Restaurants, durch das Sprachkommunikationsmittels 5.

Weiterhin ist eine zusätzliche Kennzeichnung einer oder mehrerer der benannten Zieladressen vorgesehen. Eine solche Kennzeichnung erfolgt beispielsweise durch Betätigung eines manuellen Bedienelements an der Bedieneinheit 3 vor, während oder nach der Benennung einer Zieladresse oder für den Fall, dass eine Zieladresse akustisch benannt wird, durch Sprechen spezieller Schlüsselwörter, wie z.B. des Worts "Zwischenreiseziel".

Das Sprachkommunikationsmittel 5 überträgt die oder jede vom Nutzer akustisch benannte Zieladresse als Sprachnachricht durch zumindest zeitweisen Aufbau einer drahtlosen Verbindung zum Kommunikationsmittel 4" in der Dienstezentrale 6. Dabei wird die Sprachnachricht in herkömmlicher Weise übertragen, d.h. die oder alle unter Verwendung des Sprachkommunikationsmittels 5 benannten Zieladressen werden in der Reihenfolge ihrer Benennung quasi als "Telefongespräch" übertragen.

Das Kommunikationsmittel 4' überträgt die oder jede vom Nutzer durch Nutzung der Bedieneinheit 3 benannte Zieladresse, den durch Nutzung des Idenmittels 17 generierten und den Nutzer charakterisierenden Datensatz sowie eine Kennungsinformation des Navigationssystems 2 (z.B. die Baureihenbezeichnung des Navigationssystems 2) durch zumindest zeitweisen Aufbau einer drahtlosen Verbindung zum Kommunikationsmittel 4'' in der Dienstezentrale 6. Dabei ist abhängig von der Realisierungsform der Bedieneinheit 3 wahlweise eine Übertragung als Sprachnachricht ZA und/ oder als Datennachricht ZD vorgesehen. Sprachnachrichten werden an das Kommunikationsmittel 4' gesendet und in der Reihenfolge ihrer Benennung als "Telefongespräch" übertragen. Datennachrichten werden nach der vollständigen Benennung einer Zieladresse entweder von der Bedieneinheit 3 sofort an das Kommunikationsmittel 4' gesendet oder sämtliche innerhalb einer einstellbaren Zeitdauer durch Nutzung der Bedieneinheit 3 vollständig benannten Zieladressen werden in der Bedieneinheit 3 zwischengespeichert und anschließend gesammelt an das Kommunikationsmittel 4' übertragen. Ob eine sofortige oder eine gesammelte Übertragung von der Bedieneinheit 3 an das Kommunikationsmittel 4' gewählt wird, ist beispielsweise abhängig von dem vom Kommunikationsmittel 4' verwendeten Mobilfunknetz. Für das sofortige Senden einer vollständig benannten Zieladresse von der Bedieneinheit 3 an das Kommunikationsmittel 4' ist z.B. eine Betätigung eines manuellen Bedienelements durch den Nutzer vorgesehen.

Die oder jede durch den Nutzer im Kraftfahrzeug 1 benannte Zieladresse wird durch das Kommunikationsmittel 4' und/ oder das Sprachkommunikationsmittel 5 drahtlos an das Kommunikationsmittel 4'' in der Dienstezentrale 6 gesendet. Vom Kommunikationsmittel 4" wird die benannte Zieladresse als Sprachnachricht ZA und/ oder als Datennachricht ZD dem Zielerkennungsmittel 7 verfügbar gemacht. Dabei ist das Zielerkennungsmittel 7 beispielsweise ebenso wie das Mittel zur Zielinformationsdatenerzeugung 10 als Bestandteil eines herkömmlichen Rechnersystems ausgeführt, wobei als weitere Bestandteile ein oder mehrere herkömmliche Speichereinheiten, z.B. Festplattenspeicher und/ oder CD-ROM, für die Adressdatenbank 9 bzw. die digitale Straßenkarte 11 sowie eine Anzeigeeinheit, z.B. ein Bildschirm, mit einer zugeordneten Eingabemöglichkeit, z.B. einer Eingabetastatur, für den Bedienpersonalzugriff 8 vorgesehen sind.

Das Zielerkennungsmittel 7 verarbeitet eine vom Nutzer benannte Zieladresse, wobei diese Zieladresse entweder als Sprachnachricht ZA oder als Datennachricht ZD bereitgestellt wird, in zwei Schritten. In einem ersten Schritt wird die Zieladresse auf Richtigkeit und Vollständigkeit geprüft. Unter Verwendung der Adressdatenbank 9 wird untersucht, ob die Zieladresse eindeutig ist, d.h., ob die durch den Nutzer benannte Zieladresse genau ein Mal im Datenbestand vorliegt. Liegt die Zieladresse dabei als Datennachricht ZD vor, werden für diese Untersuchung herkömmliche Verfahren von Texterkennung und -vergleich verwendet, die hier keiner näheren Erläuterung bedürfen. Liegt die Zieladresse als Sprachnachricht ZA vor, so wird diese Sprachnachricht ZA einem Spracherkennungsmodul zugeführt. Dabei können auch weitere Spracherkennungsmodule für fremdsprachliche Zieladressen vorgesehen sein. Das Spracherkennungsmodul verarbeitet die Sprachnachricht ZA automatisiert und erzeugt eine entsprechende Datennachricht. Diese Datennachricht wird wie oben beschrieben verarbeitet.

Alternativ wird die Zieladresse über einen Bedienpersonalzugriff 8 einem Bediener verfügbar gemacht. Der Bediener ist z.B. ein Fachmann, der speziell geschult ist, um unklar oder in einem Sprachdialekt bzw. einer Fremdsprache ausgesprochene Wörter zu erkennen. Der Bediener nutzt über den Bedienpersonalzugriff 8 die Adressdatenbank 9 zur eindeutigen Identifizierung der vom Nutzer benannten Zieladresse. Über den Bedienpersonalzugriff 8 werden dem Bediener auch solche Zieladressen zur manuellen Identifizierung verfügbar gemacht, die nicht automatisiert identifizierbar sind. Zusätzlich kann eine Rückfragemöglichkeit durch den Bediener beim Nutzer im Kraftfahrzeug 1 beispielsweise über das Kommunikationsmittel 4'' vorgesehen sein. Eine solche Rückfrage beim Nutzer wird z.B. bei einer nicht durchführbaren manuellen Identifizierung einer vom Nutzer benannten Zieladresse initiiert.

Für den Fall, dass eine vom Nutzer benannte Zieladresse nicht eindeutig identifizierbar ist, können weitere Daten verfügbar gemacht werden. Beispielsweise werden aus einem Speicher 14 in einer Datenzentrale 13 über ein Kommunikationsmittel 4''' drahtlos weitere Daten wie z.B. fremdsprachliche Adressdaten an das Kommunikationsmittel 4" in der Dienstezentrale 6 gesendet.

Zusätzlich oder alternativ werden für einen Nutzer aus einer personalisierten Zieldatenbank 8 spezielle persönliche Adressen berücksichtigt. Die Auswahl der dem jeweiligen Nutzer zugeordneten speziellen persönlichen Adressen wird durch den unter Verwendung des Identmittel 17 im Kraftfahrzeug 1 generierten und den Nutzer charakterisierenden Datensatzes bewirkt. In der personalisierten Zieldatenbank 8 werden beispielsweise Zieladressen früher vom Nutzer durchgeführter Fahrten als spezielle persönlichen Adresse abgelegt.

In einem zweiten Schritt werden einer benannten und eindeutig identifizierten Zieladresse durch das Zielerkennungsmittel 7 geographische Koordinaten zugeordnet. Dabei wird das gleiche System von geographischen Koordinaten (z.B. "WGS84") verwendet, wie es auch das Navigationssystem des Kraftfahrzeugs verwendet. Die Zuordnung geographischer Koordinaten zu Zieladressen erfolgt durch einen automatisierten Einsatz bekannter Verfahren der Geodäsie unter Verwendung der digitalen Straßenkarte 11.

Die oder jede durch den Nutzer im Kraftfahrzeug 1 benannte, durch das Zielerkennungsmittel 7 eindeutige identifizierte und geographischen Koordinaten zugeordnete Zieladresse wird dann einem Mittel zur Zielinformationsdatenerzeugung 10 zugeführt. Das Mittel zur Zielinformationsdatenerzeugung 10 erzeugt zu der oder jeder Zieladresse geeignete Zielinformationsdaten ZI zur Zielauswahl des Navigationssystems 2 im Kraftfahrzeug 1.

Wird vom Nutzer mehr als eine Zieladresse benannt, dann selektiert das Mittel zur Zielinformationsdatenerzeugung 10 aus den vom Nutzer benannten Zieladressen genau ein "Endreiseziel" als Zielpunkt der Reise. Die restlichen vom Nutzer benannten Zieladressen werden als Zwischenreiseziele klassifiziert, also ein während der Reise erst zu erreichendes und anschließend wieder zu verlassendes Reiseziel. Beispielsweise wird diese Einteilung in der Art vorgenommen, dass die erste bzw. die letzte vom Nutzer benannte Zieladresse das Endreiseziel und alle anderern benannten Zieladressen Zwischenreiseziele sind. Diese Art der Einteilung wird z.B. für den Fall vorgenommen, dass der Nutzer alle Zieladressen ohne Pause nacheinander benennt und keine der Zieladressen vom Nutzer zusätzlich gekennzeichnet worden ist. Ob dabei die erste oder die letzte benannte Zieladresse das Endreiseziel ist, wird z.B. abhängig von der Lage aller benannten und geographischen Koordinaten zugeordneten Zieladressen unter Verwendung der digitalen Straßenkarte 11 bestimmt. Falls von der momentanen Position des Kraftfahrzeug 1 aus betrachtet die erste vom Nutzer benannte Zieladresse "am nächsten" von allen benannten Zieladressen liegt, so wird die letzte benannte Zieladresse als Endreiseziel bestimmt. Andernfalls wird die erste benannte Zieladresse als Endreiseziel bestimmt. Die restlichen vom Nutzer benannten Zieladressen werden als Zwischenreiseziele klassifiziert.

Alternativ oder zusätzlich wird geprüft, ob eine benannte Zieladresse bereits in der personalisierten Zieldatenbank 8 abgelegt ist. Für den Fall, dass eine benannte Zieladresse in der personalisierten Zieldatenbank 8 abgelegt ist, wird eine zu dieser Zieladresse gehörende Kennzeichnung als Zwischenreiseziel bzw. Endreiseziel vom Mittel zur Zielinformationsdatenerzeugung 10 bei der entsprechenden Einteilung dieser benannten Zieladresse berücksichtigt. Für den Fall, dass eine benannte Zieladresse nicht in der personalisierten Zieldatenbank 8 enthalten ist, wird diese Zieladresse zusammen mit einer entsprechenden Kennzeichnung als Zwischenreiseziel bzw. Endreiseziel vom Mittel zur Zielinformationsdatenerzeugung 10 in der personalisierten Zieldatenbank 8 abgelegt.

Wenn vom Nutzer mehr als zwei Adressen benannt worden sind, d.h. wenn mehr als ein Zwischenreiseziel vorliegt, bestimmt das Mittel zur Zielinformationsdatenerzeugung 10 eine für den Nutzer günstige Reihenfolge bei der "Anordnung" der Zwischenreiseziele auf der Reiseroute. Hierzu werden beispielsweise herkömmliche Verfahren zur Bestimmung kürzester Wege unter Verwendung der digitalen Straßenkarte 11 genutzt. Um eine entsprechende Reihenfolge der Zwischenreiseziele zu bestimmen, kann ebenfalls die Nutzung des Bedienpersonalzugriffs 8 zur manuellen Anordnung der Reihenfolge der Zwischenreiseziele auf der Reiseroute durch den Bediener vorgesehen sein.

Aus der oder jeder durch den Nutzer im Kraftfahrzeug 1 benannten und durch das Zielerkennungsmittel 7 eindeutig identifizierten und geographischen Koordinaten zugeordneten Zieladresse sind vom Mittel zur Zielinformationsdatenerzeugung 10 Zielinformationsdaten ZI erzeugt worden. Diese Zielinformationsdaten ZI werden durch das Kommunikationsmittel 4'' drahtlos dem Kommunikationsmittel 4' im Kraftfahrzeug 1 zugeführt. Das Kommunikationsmittel 4' sendet die Zielinformationsdaten ZI an die Bedieneinheit 3. Die Bedieneinheit 3 steuert mit den empfangenen Zielinformationsdaten ZI das Navigationssystem 2 an. Dabei wird zur Zielauswahl dem Navigationssystem 2 ein vom Nutzer ausgewähltes Reiseziel in geographischen Koordinaten zur weiteren automatisierten Verarbeitung verfügbar gemacht. Das Reiseziel ist dabei als ein Zwischenreiseziel oder als das Endreiseziel eine der vom Nutzer benannten, eindeutig identifizierten und geographischen Koordinaten zugeordneten Zieladressen.

Wurde vom Nutzer mehr als eine Zieladresse benannt und umfassen die Zielinformationsdaten ZI somit wenigstens ein Zwischenreiseziel, so erfolgt die weitere Verarbeitung abhängig von der Art des verwendeten Navigationssystems 2. Für den Fall, dass eine Verarbeitung von Zwischenreisezielen durch das Navigationssystem 2 vorgesehen ist, wird das Navigationssystem 2 durch die Bedieneinheit 3 mit den Zielinformationsdaten ZI gesammelt angesteuert. Das bedeutet, dass für alle n vom Nutzer benannten Adressen die entsprechenden Zielinformationsdaten ZI(n) "auf einmal" an das Navigationssystem 2 gesendet werden, bestehend aus allen Zwischenreiseziel und dem Endreiseziel. Andernfalls werden dem Navigationssystem 2 die Zielinformationsdaten ZI(n) für alle n vom Nutzer benannten Zieladressen entsprechend ihrer vorgegebenen Reihenfolge nacheinander als Reiseziel bereitgestellt. Dabei wird jedes Zwischenreiseziel dem Navigationssystem 2 gewissermaßen als "vorläufiges Endreiseziel" bereitgestellt. Mit dem Erreichen eines Reiseziels sendet das Navigationssystem 2 ein Signal W an die Bedieneinheit 3. Nach dem Empfang eines solchen Signals W durch die Bedieneinheit 3 sendet die Bedieneinheit 3 die nächsten Zielinformationsdaten ZI(n) entsprechend dem nächsten Reiseziel an das Navigationssystem 2. Wenn nach dem Senden eines Signals W durch das Navigationssystem 2 keine neuen Zielinformationsdaten ZI(n) vom Navigationssystem 2 mehr empfangen werden, bedeutet dies das Erreichen des Endreiseziels. Die Reihenfolge der Zielinformationsdaten ZI(n), d.h. die Anordnung der n vom Nutzer benannten Zieladressen, wird dabei nicht in der vom Nutzer benannten Weise, sondern entsprechend der vom Mittel zur Zielinformationsdatenerzeugung 10 als am günstigsten bestimmten Reihenfolge vorgenommen.

## Patentansprüche

1. Verfahren zur Zielauswahl eines Navigationssystems (2) in einem Kraftfahrzeug (1) unter Verwendung einer Dienstezentrale (6), wobei zur Zielauswahl dem Kraftfahrzeug (1) drahtlos nach Angaben eines Nutzers erstellte Zielinformationsdaten (ZI) von der Dienstezentrale (6) zugeführt werden,
**dadurch gekennzeichnet,**
**dass** eine Bedieneinheit (3) im Kraftfahrzeug (1) vorgesehen ist, wobei
- wenigstens eine vom Nutzer benannte Zieladresse drahtlos an die Dienstezentrale (6) gesendet wird,
- die Dienstezentrale (6) geeignete Zielinformationsdaten (ZI) zu dieser Adresse zur Zielauswahl des Navigationssystems (2) erzeugt,
- die erzeugten Zielinformationsdaten (ZI) von der Dienstezentrale (6) drahtlos der Bedieneinheit (3) zugeführt werden und
- die Bedieneinheit (3) mit den Zielinformationsdaten (ZI) das Navigationssystem (2) ansteuert.

2. Verfahren nach Anspruch 1,
**dadurch gekennzeichnet,**
**dass** wenigstens eine der Zieladressen vom Nutzer als vollständige, übliche Adresse benannt wird.

3. Verfahren nach Anspruch 2,
**dadurch gekennzeichnet,**
**dass** wenigstens eine der Zieladressen vom Nutzer in der Form "Vorname, Nachname, Straßenname, Hausnummer, Wohnort" benannt wird.

4. Verfahren nach einem der Ansprüche 1 bis 3,
**dadurch gekennzeichnet,**
**dass** wenigstens eine der Zieladressen vom Nutzer unter Verwendung der Bedieneinheit (3) benannt wird.

5. Verfahren nach einem der Ansprüche 1 bis 4,
**dadurch gekennzeichnet,**
**dass** wenigstens eine der vom Nutzer benannten Zieladressen als Sprachnachricht (ZA) an die Dienstezentrale (6) gesendet wird.

6. Verfahren nach einem der Ansprüche 1 bis 5,
**dadurch gekennzeichnet,**
**dass** wenigstens eine der vom Nutzer benannten Zieladressen als Datennachricht (ZD) an die Dienstezentrale (6) gesendet wird.

7. Verfahren nach einem der Ansprüche 1 bis 6,
**dadurch gekennzeichnet,**
**dass** wenigstens eine der vom Nutzer benannten Zieladressen eine standardisierte Adresse ist.

8. Verfahren nach einem der Ansprüche 1 bis 7,
**dadurch gekennzeichnet,**
**dass** die Zielauswahl mindestens ein Zwischenreiseziel umfasst.

9. Verfahren nach Anspruch 8,
**dadurch gekennzeichnet,**
**dass** wenigstens eine der vom Nutzer benannten Zieladressen zusätzlich gekennzeichnet wird.

10. Verfahren nach Anspruch 8 oder 9,
**dadurch gekennzeichnet,**
**dass** das Navigationssystem (2) durch die Bedieneinheit (3) mit den der Bedieneinheit (3) zugeführten Zielinformationsdaten (ZI) für jedes Zwischenreiseziel getrennt angesteuert wird.

11. Verfahren nach Anspruch 8 oder 9,
**dadurch gekennzeichnet,**
**dass** das Navigationssystem (2) durch die Bedieneinheit (3) mit den der Bedieneinheit (3) zugeführten Zielinformationsdaten (ZI) gesammelt angesteuert wird.

12. Verfahren nach einem der Ansprüche 1 bis 11,
**dadurch gekennzeichnet,**
**dass** eine Kennungsinformation des Navigationssystems (2) an die Dienstezentrale (6) gesendet wird.

13. Verfahren nach einem der Ansprüche 1 bis 12,
**dadurch gekennzeichnet,**
**dass** Information zur Identifizierung des die Zielauswahl vornehmenden Nutzers an die Dienstezentrale (6) gesendet wird.

14. Verfahren nach einem der Ansprüche 1 bis 13,
**dadurch gekennzeichnet,**
**dass** die drahtlose Verbindung zwischen Dienstezentrale (6) und Kraftfahrzeug (1) über ein Mobilfunknetz hergestellt wird.

15. Vorrichtung zur Zielauswahl eines Navigationssystems (2) in einem Kraftfahrzeug (1) unter Verwendung einer Dienstezentrale (6), wobei zur Zielauswahl dem Kraftfahrzeug (1) drahtlos nach Angaben eines Nutzers erstellte Zielformationsdaten (ZI) von der Dienstezentrale (6) zugeführt werden,
**dadurch gekennzeichnet,**
**dass** eine Bedieneinheit (3) im Kraftfahrzeug (1) vorgesehen ist sowie ein Kommunikationsmittel (4') und/ oder ein Sprachkommunikationsmittels (5), wobei
- wenigstens eine vom Nutzer unter Verwendung der Bedieneinheit (3) benannte Zieladresse drahtlos als Datennachricht (ZD) oder als Sprachnachricht (ZA) an ein Kommunikationsmittel (4'') in der Dienstezentrale (6) gesendet wird und/oder wenigstens eine vom Nutzer akustisch benannte alphanumerische Adresse drahtlos vom Sprachkommunikationsmittels (5) an das Kommunikationsmittel (4'') in der Dienstezentrale (6) gesendet wird,
- in der Dienstezentrale (6) ein Zielerkennungsmittel (7) im Zusammenwirken mit einem Mittel zur Zielinformationsdatenerzeugung (10) unter Verwendung zumindest einer Adressdatenbank (9) und einer digitalen Straßenkarte (11) geeignete Zielinformationsdaten (ZI) zur Zielauswahl des Navigationssystems (2) zu dieser Adresse erzeugt,
- die erzeugten Zielinformationsdaten (ZI) drahtlos vom Kommunikationsmittel (4'') in der Dienstezentrale (6) an das Kommunikationsmittel (4') im Kraftfahrzeug (1) übertragen und anschließend der Bedieneinheit (3) zugeführt werden und
- die Bedieneinheit (3) mit den Zielinformationsdaten (ZI) das Navigationssystem (2) ansteuert.
